# EUROPEAN PATENT APPLICATION

(11) **EP 2 736 250 A2**
(43) Date of publication of application: **28.05.2014**
(21) Application number: 13183045.7
(22) Date of filing: 04.09.2013
(51) Int. Cl.: H04N 5/783, H04N 9/82, H04N 21/472, H04N 21/482, H04N 21/488, H04N 21/81, H04N 21/845

(54) **VIDEO CONTENT SEARCH METHOD, SYSTEM, AND DEVICE**

(30) Priority: 21.11.2012 TW 101143517
(71) Applicant: Hon Hai Precision Industry Co., Ltd., New Taipei City (TW)
(72) Inventor: Lee, Chung-I, New Taipei (TW); Yeh, Chien-fA, New Taipei (TW); Jeng, Shan-Chuan, New Taipei (TW)
(74) Representative: Gray, John James

(57) **Abstract**

In a video content search method, dialogue can be tracked and isolated by a keyword being inputted by a user and compared with subtitles of a stored video currently being played in a media player (S02), and subtitles which match or contain the inputted keyword are output to a display device (S04). A subtitle from the display of any matching subtitles can be selected by the user and the media player is controlled to jump a video frame currently being played to a single video frame associated with the selected subtitle (S06).

## Description

### Field

Embodiments of the present disclosure relate to query processing, and more specifically relates to techniques for searching video content in a video file.

### BackGround

A media player plays multimedia files including audio and video. Media players include icons for controlling playing of the multimedia files. Examples of these icons are a play button, a pause button, a stop button, a fast forward button, and a fast backward button, all in virtual form.

When playing a video forwards or backwards, a user must to repeatedly press the fast forward button or the fast backward button. Such operations are time-consuming and troublesome.

### Summary

According to one aspect of the disclosure, a video content searching method is provided. The video content searching method includes comparing a keyword with subtitles of a video currently being played by a media player; outputting matching subtitles to a display device; receiving a selected subtitle from the matching subtitles; and controlling the media player to jump a video frame currently being played to a video frame corresponding to the selected subtitle.

### BRIEF DESCRIPTION OF THE DRAWINGS

Embodiments of the invention are described, by way of example only, with reference to the accompanying drawings, in which:

FIG. 1 is a block diagram of one embodiment of an electronic device that includes a video content search system.

FIG. 2A and FIG. 2B respectively illustrate elements in a video frame of a video.

FIG. 3 is a block diagram of one embodiment of function modules of the video content search system.

FIG. 4 is a flowchart of one embodiment of a video content searching method.

### DETAILED DESCRIPTION

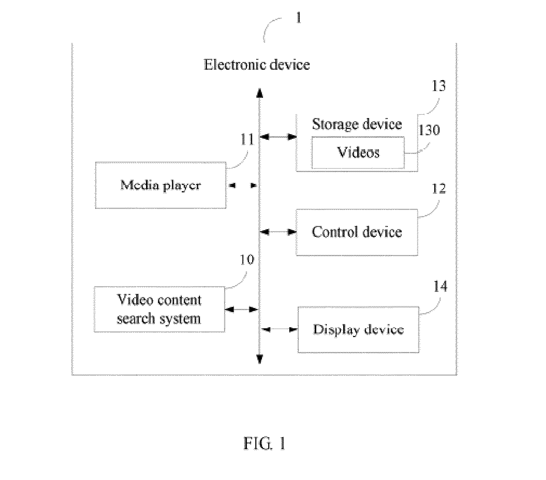

FIG. 1 is a block diagram of one embodiment of an electronic device 1 that includes a video content search system 10. The electronic device 1 may be a computer, or a personal digital assistant (PDA), a smart phone, for example. The electronic device 1 further includes a media player 11, a control device 12, a storage device 13, and a display device 14. One skilled in the art recognizes that the computing device 1 may be configured in a number of other ways and may include other or different components.

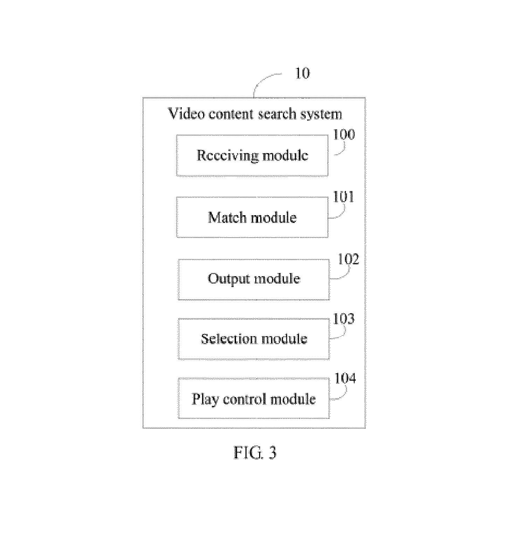

The video content search system 10 includes computerized codes in the form of one or more programs, which are stored in the storage device 13. In the present embodiment, the one or more programs of the video content search system 10 are described in the form of function modules (see FIG. 3), which are executed by the control device 12 to perform functions of searching video contents according to keywords inputted by users.

The control device 12 may be a processor, a microprocessor, an application-specific integrated circuit (ASIC), or a field programmable gate array, (FPGA) for example.

The storage device 13 may include some type(s) of non-transitory computer-readable storage mediums, such as a hard disk drive, a compact disc, a digital video disc, or a tape drive.

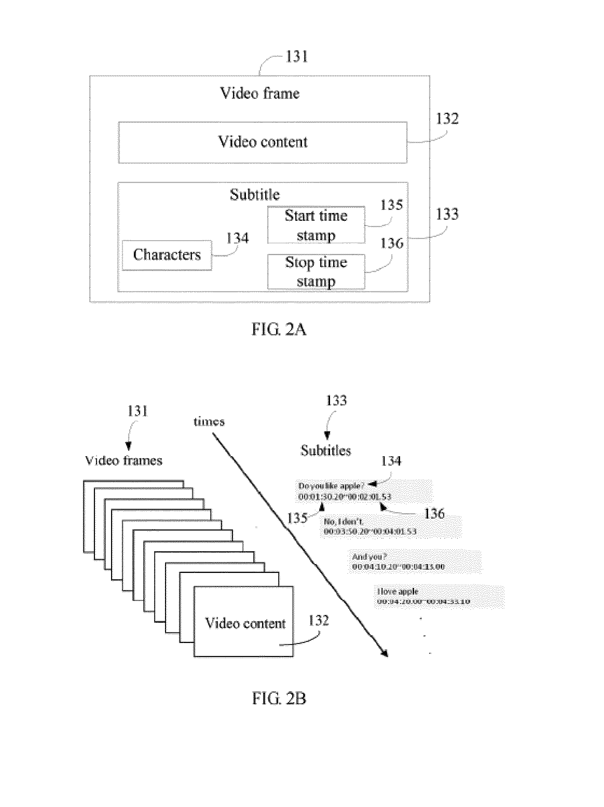

The storage device 13 stores videos 130 that can be played by the media player 11. Each of the videos 130 includes a plurality of video frames, each frame is a still image which composes the complete video. Referring to FIG. 2A and FIG. 2B, each video frame 131 is constituted by video content 132 and subtitles 133. The video content 132 includes images, and a single subtitle 133 includes characters 134, a start time stamp 135, and a stop time stamp 136.

The display device 14 displays the videos 130 stored in the storage device 13 when the videos 130 are played by the media player 11.

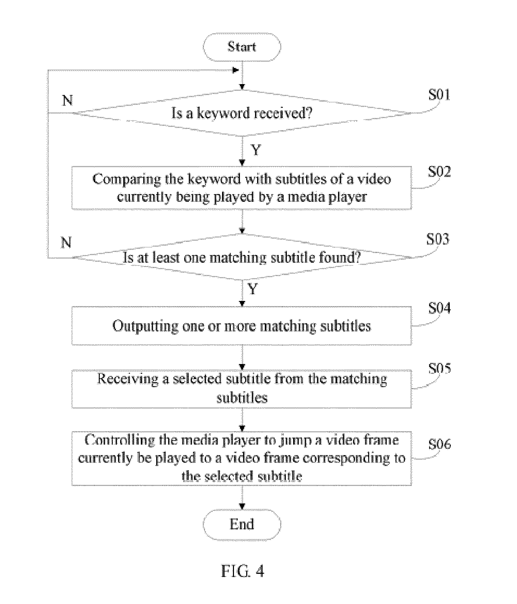

FIG. 3 is a block diagram of one embodiment of function modules of the video content search system 10. In one embodiment, the video content search system 10 includes a receiving module 100, a match module 101, an output module 102, a selection module 103, and a play control module 104. The function modules 100-104 provide at least the functions needed to execute the steps illustrated in FIG. 4 below.

FIG. 4 is a flowchart of one embodiment of a video content searching method. Depending on the embodiment, additional steps in FIG. 4 may be added, others removed, and the ordering of the steps may be changed.

In step S01, the receiving module 100 determines if a keyword is received. The receiving module 100 may provide an input box to receive a keyword. When a keyword is received, step S02 is implemented. Otherwise, until a keyword is received, step S01 is repeated.

In step S02, the match module 101 compares the keyword with the subtitles 133 of a video 130 currently being played by the media player 11. In one embodiment, the match module 101 compares the keyword with the characters 134 in the subtitles 133 to find one or more single matching subtitles which contain the keyword. For example, referring to FIG. 2A, when the keyword is "Apple," the match module 101 compares the keyword "Apples" with the characters of "Do you like apple?" in a first subtitle, the characters of "No, I don't." in a second subtitle, the characters of "And you?" in a third subtitle, and the characters of "I love apple" in a fourth subtitle. Thus, the matching subtitles are the first and fourth subtitles, namely "Do you like apple?" and "I love apple." In addition, the match module 101 obtains the start time stamp 135 and the stop time stamp 136 of the matching subtitles.

In step S03, the match module 101 determines if at least one matching subtitle is found. The process goes to Step S01 when no matching subtitle is found. Otherwise, step S04 is implemented if at least one matching subtitle is found.

In step S04, the output module 102 outputs the matching subtitles to the display device 14. In one embodiment, the output module 102 may output the matching subtitles using a list which is displayed on the display device 14 for a user to select one of the matching subtitles. In one embodiment, in the list, the matching subtitles are ranked according to the earliest start time stamp 135 followed by the later start time stamps 135 of each of the matching subtitles.

In step S05, the selection module 103 receives a selected subtitle from the matching subtitles.

In step S06, the play control module 104 controls the media player 11 to jump a video frame currently being played to a video frame corresponding to the selected subtitle. In one embodiment, the play control module 104 controls the media player 11 to jump a video frame currently being played to a video frame corresponding to the selected subtitle according to the start time stamp 135 of the selected subtitle.

While specific embodiments of the invention have been described above, it is to be understood that the embodiments described herein can be implemented in hardware, software, firmware, middleware, microcode, or any combination thereof. For example, the invention may take the form of a computer program containing one or more sequences of machine-readable instructions which, when executed by a computer, causes the computer to perform one or more method described above.

When the embodiments are implemented in software, firmware, middleware or microcode, program code or code segments, they can be stored in a machine-readable medium, such as a storage component. The term "machine-readable medium" can include, without being limited to, wireless channels and various other media capable of storing, containing, and/or carrying instruction(s) and/or data. A code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, etc. can be passed, forwarded, or transmitted using any suitable means including memory sharing, message passing, token passing, network transmission, etc. For a software implementation, the techniques described herein can be implemented with modules (e.g., procedures, functions, and so on) that perform the functions described herein. The software codes can be stored in memory units and executed by processors. The memory unit can be implemented within the processor or external to the processor, in which case it can be communicatively coupled to the processor via various means as is known in the art.

For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. All of the processes described above may be embodied in, and fully automated via, functional code modules executed by one or more general purpose electronic devices or processors. The code modules may be stored in any type of non-transitory machine-readable medium or other storage device. Some or all of the methods may alternatively be embodied in specialized hardware. Depending on the embodiment, the non-transitory machine-readable medium may be a hard disk drive, a compact disc, a digital video disc, a tape drive or other suitable storage medium.

It should be emphasized that the above-described embodiments of the present disclosure, particularly, any embodiments, are merely possible examples of implementations, merely set forth for a clear understanding of the principles of the disclosure. Many variations and modifications may be made to the above-described embodiment(s) of the disclosure without departing substantially from the spirit and principles of the disclosure. All such modifications and variations are intended to be included herein within the scope of this disclosure and the present disclosure and protected by the following claims.

## Claims

1. A video content searching method, the method being executed by at least one processor of an electronic device, the method comprising:
comparing a keyword with subtitles of a video currently being played by a media player;
outputting matching subtitles to a display device;
receiving a selected subtitle from the matching subtitles; and
controlling the media player to jump a video frame currently being played to a video frame corresponding to the selected subtitle.

2. The method according to claim 1, wherein the subtitles of the video comprises characters, a start time stamp, and a stop time stamp.

3. The method according to claim 2, wherein the keyword is compared with the characters to find the matching subtitles which contain the keyword.

4. The method according to claim 1, 2 or 3, wherein the media player jumps a video frame currently being played to a video frame corresponding to the selected subtitle according to the start time stamp of the selected subtitle.

5. The method according to claim 2, 3, or 4, wherein the matching subtitles are ranked according to the start time stamp of each of the matching subtitles.

6. An electronic device, comprising:
a control device; and
a storage device storing one or more programs which when executed by the control device, causes the processing device to:
compare a keyword with subtitles of a video currently being played by a media player;
output matching subtitles to a display device;
receive a selected subtitle from the matching subtitles; and
control the media player to jump a video frame currently being played to a video frame corresponding to the selected subtitle.

7. The electronic device according to claim 6, wherein the subtitles of the video comprises characters, a start time stamp, and a stop time stamp.

8. The electronic device according to claim 7, wherein the keyword is compared with the characters to find the matching subtitles which contain the keyword.

9. The electronic device according to claim 6, 7 or 8, wherein the media player jump a video frame currently being played to a video frame corresponding to the selected subtitle according to the start time stamp of the selected subtitle.

10. The electronic device according to claim 7, 8 or 9, wherein the matching subtitles are ranked according to the start time stamp of each of the matching subtitles.

11. A storage medium having stored thereon instructions that, when executed by a processor of an electronic device, causes the processor to perform a video content searching method as claimed in any of claims 1 to 5.
